# EUROPEAN PATENT SPECIFICATION

(11) **EP 3 226 190 B1**
(45) Date of publication and mention of the grant of the patent: **29.01.2025**
(21) Application number: 17172013.9
(22) Date of filing: 04.09.2013
(51) Int. Cl.: G06Q 20/32, G06Q 20/34, G06Q 20/40

(54) **PRE-PAID VIRTUAL CARD AND METHOD FOR ITS CREATION AND ITS UTILIZATION**
VIRTUELLE PREPAID-KARTE UND VERFAHREN ZU DEREN HERSTELLUNG UND DEREN VERWENDUNG
CARTE PRÉ-PAYÉE VIRTUELLE, SON PROCÉDÉ DE CRÉATION ET SON UTILISATION

(30) Priority: 06.09.2012 IT PD20120257
(43) Date of publication of application: 04.10.2017
(62) Divisional of application: 13785596.1
(73) Proprietor: 2Pay S.r.l., 31044 Montebelluna (IT)
(72) Inventor: OCCARI, Diego, 35142 Padova (IT); BERNARDI, Daniele, 30020 Marcon (IT)
(74) Representative: Piovesana, Paolo

(56) References cited:
- US-A1- 2009 006 254
- US-A1- 2009 254 440
- US-A1- 2011 153 437
- DUSTIN KARNES: "MasterCard CSI globalVCard Steps onto Mobile Payment Scene, Available to Nearly 92% of Smartphone Users", 11 October 2011 (2011-10-11), XP002700694, Retrieved from the Internet <URL:http://web.archive.org/web/20120322154822/http://www.androidguys.com/2011/10/11/mastercard-csi-globalvcard-steps-mobile-payment-scene-92-smartphone-users/> [retrieved on 20130705]

## Description

The present invention relates to a pre-paid virtual card and to a method for its creation and its utilization.

Virtual prepaid cards exist consisting of electronic money instruments, used to make payments without materially transferring money. These provide for the person concerned to stipulate with an authorized Electronic Money Institution (EMI) or with a Bank, a contract according to which, as a result of transfers made in determined manners to a certain account held at the Electronic Money Institution or at a Bank Institution connected thereto, the person concerned has an availability of money, with which to make on-line purchases, obviously within limits set by appropriate regulations.

Traditional virtual prepaid cards are characterised by a sixteen-digit PAN code, which has to be entered by the user each time the card is used to make an on-line purchase, and by an IBAN code, to be used to top-up the card.

It is also known to use virtual prepaid cards as payment cards to top-up physical prepaid cards. However, there is no way in which payments can be made from one virtual prepaid card to another.

Finally, it is known to use cell phones in payment systems, including to transfer money by debiting a credit card of the settlor.

However, there is no way in which the cell phone can be used to create and to use virtual prepaid cards as electronic money instruments.

The reference "MasterCard CSI globalVCard Steps onto Mobile Payment Scene, Available to Nearly 92% of Smartphone Users" describes a particular virtual card called "CSI MasterCard global vCard" and an APP that can be downloaded on mobile phones or tablets and that permits the creation of a virtual card by setting only the amount of money to be charged, as well as specifying the number of transactions for which the card will be valid (one or more).

US 2009/006254 describes a method for creating a virtual prepaid card. In particular, it describes the use of a phone wherein, in order to activate the virtual card, the user must call a special number and use a complicated authentication voice service. Moreover, once the card has been created, the relevant data is then sent via SMS to the user.

US 2011/153437 describes a method for creating a virtual card. It provides:
- the use of a mobile device to generate a request for the data, having limited use, associated with a virtual credit card,
- the receiving, in response to the request, of the requested data,
- the configuration, by means of a suitable electronic interface to be associated with a mobile device, of an area of a plasticized physical card, in which are inserted the received data relating to the virtual card.

US 2009/0254440 describes an enrolling procedure comprising the following steps:
- a step wherein the user supplies in a kiosk, a web portal or to a clerk a mobile phone number and identification data to enroll in the system,
- a step wherein these data, once supplied, are transmitted to the transaction server for their verification,
- a step wherein the transaction server communicates with the affiliated bank to establish an account to bind to the mobile phone,
- a step wherein the user installs on their mobile phone an application that is used to initiate a payment transaction.

In particular, the user enters manually his/her mobile phone number so the transaction server is provided with a software for controlling/verifying the information entered by the user. Moreover, in US 2009/0254440 the telephone subscription number is just a part of the card identifier since the latter also comprises a further ten-digit bank account number assigned by the affiliate bank.

An object of the invention is to create a virtual prepaid card usable as an electronic money instrument both to make payments and to make money transfers.

Another object of the invention is to create a virtual prepaid card of very simple use.

Another object of the invention is to create a pre-paid virtual card which substantially reduces entering errors by the user while at the same time facilitating control operations by the operator.

Another object of the invention is to provide a method both for creating and using a virtual card by means a single application (APP).

Another object of the invention is to provide a method that allows to eliminate the need of having software to create, assign and store virtual card identifiers or, more generally, in order to reduce the computing power in the creation of a virtual credit card.

Another object of the invention is to provide a method for simplifying the creation of the pre-paid virtual card and/or the enrolment procedure of the user.

Another object of the invention is to provide a method for simplifying the software and/or the hardware infrastructure required for the creation of the pre-paid virtual card and/or for the enrolment procedure of the user.

Another object of the invention is to provide a method providing a way for the creation of the pre-paid virtual card and/or for the enrolment/registration of the user that is alternative in respect of the known solutions.

These and other objects, taken individually or in any combination thereof, which will be apparent from the ensuing description are attained according to the invention by a method for creating a pre-paid virtual card as indicated in claim 1 and a pre-paid virtual card presenting the characteristics indicated in claim 15.

A preferred embodiment of the invention is further clarified hereinafter by way of non-limiting example.

In greater detail, the pre-paid virtual card according to the invention consists of an electronic money instrument characterised, as are all electronic money instruments, by an identifier which, in the case of a traditional pre-paid virtual card, is assigned by the service operator, whereas according to the present invention, it consists of the telephone subscription number of the cell phone used for creating the pre-paid virtual card and for its use.

For its creation, the user uses a smartphone, to download from the internet an APP application developed precisely for this purpose.

When the APP has been downloaded, it opens a panel in which the user can indicate the language and the currency chosen for the use of the pre-paid virtual card.

Having made these choices, the APP proposes to the user the option of operating in anonymous form (and in this case with limits in the maximum amount usable within a predetermined time period and in the amount usable for a single operation, limits dictated by anti money-laundering regulations valid at any given time in each individual country), or in registered form (and in this case without said limits or with different limits).

In any event, and independently of the manner in which the user intends to operate, the APP creates a pre-paid virtual card and associates therewith the phone number of the smartphone, into which the APP has been downloaded. It then proposes a panel, into which the user has to insert at least an E-mail address, an APP access password and a six-digit PIN security code to set the future payment arrangements, obviously within the limits established by anti money-laundering regulations.

If the user wishes to operate in registered mode, the APP presents in the smartphone a panel in which the user has to insert, in addition to the E-mail address, the password and the PIN code, also his/her personal data, tax code, a telephone number and possible V.A.T. number.

If a user who initially opted to operate in anonymous mode later decides to operate in registered mode, he/she can add to the APP that data which had initially not been supplied.

All the data which the APP has to acquire to create the pre-paid virtual card can be entered by the user at the moment in which the APP is downloaded, or, if at that stage the APP was limited to creating the pre-paid virtual card and to associate with the identifier of this the number of the cell phone into which the APP was downloaded, then at the moment in which the APP is opened for its initial use.

Independently of this, all the data regarding that user and which have been acquired by the APP have to be registered with an Electronic Money Institution (EMI) which operates the network of the pre-paid virtual card according to the invention.

Registration can be done automatically by the APP at the moment in which it was downloaded and had received the user significant data, or the data can be transmitted by the user to the EMI by the APP at the moment of its initial use, or can be transmitted directly by the user to the EMI, to which the APP has connected it at the moment of its initial use.

The manner with which the user stipulates with the EMI the contract which governs the relationship between the two in relation to the pre-paid virtual card is traditional and requires no further description.

The EMI evidently has its own computer system able to govern all relationships with users who are holders of pre-paid virtual cards.

After the pre-paid virtual card has been created, and the user data have been registered by the computer system of the EMI, the use of the APP is extremely simple, in the sense that once the APP has been opened, this proposes a screen with different options corresponding to the operations which the user has to carry out.

### Funds transfer

If the user wishes to transfer funds to another pre-paid virtual card pertaining to the same network, he/she chooses the option "SEND", which proposes a panel in which the user has to enter the identifier of the beneficiary, i.e. the telephone subscription number thereof, the amount to be transferred, possible message or reason, and any request for forwarding the settlor identifier data to the beneficiary.

Once the procedure is activated, the APP forwards the request to transfer funds to the EMI, which first verifies in its computer system the existence of the beneficiary identifier, and the presence in the pre-paid virtual card of sufficient funds to carry out the transaction.

If this check is positive, the EMI transmits to the settlor, through the APP, the main data of the beneficiary, if known, to enable the settlor to check the correctness of the data entered and the instructions given, and asks the settlor to confirm the transaction by entering the PIN code, or to cancel the operation if an error is found.

When the user has confirmed the operation, the computer system of the EMI verifies the correctness of the settlor PIN code, the correspondence of the number of the cell phone which gave the order with the one onto which the APP was downloaded at the moment of creating the pre-paid virtual card, and also the correspondence of the EMI code, which uniquely identifies the cell phone which gave the order, providing in fact a "hard authentication" of three levels of security. If the check is positive, the EMI performs the operation and informs the settlor and the beneficiary of its successful execution, while updating in real time the availability of the respective pre-paid virtual cards.

### Transferring funds to an actual current account

With the pre-paid virtual card according to the invention funds can also be transferred to an actual current account. In this case, the user chooses from the initial screen proposed by the APP at the time of its opening, the option "ORDER TO PAY", which is a sub-option of the "SEND" option. In this case, the APP proposes a different panel, requiring entry of the data required to perform the operation, and in particular the IBAN number of the beneficiary, the name of beneficiary, the amount and the reason.

In this case, the APP forwards the request to the EMI, which carries out a preliminary check on the correctness of the IBAN code of the beneficiary and of sufficient availability in the settlor pre-paid virtual card to carry out the transaction. After performing these checks the EMI sends the data to the bank of the beneficiary to obtain a verification of the correctness of the IBAN code inserted by the settlor and the amount to be paid, then on the basis of these data retransmitted to the settlor for his/her verification, requests confirmation of the operation.

This confirmation is given by the settlor by entering the PIN code.

On obtaining this confirmation the EMI updates the availability on the prepaid virtual card of the settlor, taking into account not only the amount transferred but also any commission, and also performs the usual operations connected with the transfer of funds to an actual current account.

### Transferring funds to a beneficiary not the holder of an actual current account

With the pre-paid virtual card according to the invention, money can also be transferred to a beneficiary not belonging to the EMI network, and hence not a holder of a pre-paid virtual card.

In this case, the procedure requires the user to insert into the APP the telephone number of the beneficiary.

In this case, on receiving the instructions from the settlor via the APP, the EMI sends an SMS to the cell phone indicated by the settlor, inviting the holder of this cell phone to download the APP and to register it to have the money credited.

### Request for payment

Another option for the holder of the pre-paid virtual card according to the invention is to request a payment to another person pertaining to the EMI network, and hence a holder of another pre-paid virtual.

In this case, from the initial screen which appears on the user's cell phone at the time of opening the APP, the user chooses the option "REQUEST" and enters into the panel proposed by the APP the cell phone number which identifies the user, to which the requested payment is aimed, the amount requested and the possible reason.

The request is checked by the EMI in the form already seen, and is then forwarded to the cell phone of the recipient who is able to give the payment authorization by inserting his/her own PIN code.

### Checking the Account

The same APP also provides on the initial screen next to the two items "SEND" (which also includes within it the function "PAYMENT") and "REQUESTS", the item "ACCOUNT", which allows the holder of the pre-paid virtual card to display his/her account on his/her cell phone, including the latest transactions, to verify the correctness of the operations carried out.

It should be noted that the invention, in addition to providing for communications between each user and the EMI, to take place via the APP, also enables these to also take place directly between the user and the EMI, except evidently for the initial contact to create the pre-paid virtual card, which always takes place between the user and the APP.

Finally, if the transactions take place between pre-paid virtual card holders who have chosen to work with a different currency, the computer system of the EMI instantly converts the amounts at the latest availability currency rate, crediting the beneficiary with the already converted amount and applying the commissions for the currency transaction.

In addition to these specific functions in the use of the pre-paid virtual card, further options can be provided, not strictly related to it, but still useful for carrying out with the cell phone other operations related to the use of actual credit cards held by the same user.

For this purpose, as an alternative to the use of the pre-paid virtual card, the user can also use actual credit cards, even without having them materially available. These cards must be pre-registered with the APP by inserting for each of them the relative data (name of issuer, sixteen-digit identifier number, name and surname of holder, expiry date, three-digit security code, and any PIN code). Following this registration, the credit card or credit cards may appear as options, as an alternative to the pre-paid virtual card, on the initial screen that appears on opening the APP, and allows the user to use them without having them physically available.

Essentially, the present invention differs significantly from all known pre-paid virtual cards, in that instead of having a card identifier attributed by the operator of the electronic money network, it has a different identifier, consisting of the same number as the telephone subscription number used to create the pre-paid virtual card and used when using the card. This brings a very large number of benefits for both the user and the service provider.

As regards the user, the fact that the pre-paid virtual card identifier is the same as the telephone subscription number is advantageous in that:
- a phone number is easier to remember than any other identifier; consequently a pre-paid virtual card that has as its identifier number the number of the cell phone permits an undeniable simplification in payments;
- any payment can be made by simply asking the beneficiary for his/her cell phone number, which he/she will have to hand without having to do any research; moreover, if the beneficiary is already the holder of a pre-paid virtual card, he/she will immediately receive the amount transmitted, otherwise a pre-paid virtual card can be requested by a practically immediate operation, without any delay,
- the normal phonebook with which any cell phone is provided, allows any user to immediately have available the telephone numbers of those with which he/she has most frequent contact and to which money can be transferred without the need to search for, remember, or ask clients, friends or suppliers for difficult to remember codes,
- the creation of a closed circuit by means of a pre-paid virtual card system allows money to be transferred with immediate effect, completely avoiding the inter-bank network and the POS network, with significant savings in bank charges, particularly for transactions between parties in different countries,
- the facility to top-up the pre-paid virtual card by debiting a credit card enables virtually any person to receive payments by credit card debiting, in addition to those to whom this facility was reserved in the past.

With regard to the service provider, this can also derive important advantages from the invention, in that:
- the widespread availability of cell phones enables a large number of persons to posses a pre-paid virtual card,
- public accessibility to cell phone lists, in compliance with applicable privacy provisions, makes mass distribution of the payment service extremely simple, including by SMS,
- the uniqueness of user telephone numbers and of holder identification provides an important tool in controlling both the authenticity of transactions and their absolute traceability,
- the fact that the pre-paid virtual card identifier is the same as the telephone subscription number considerably simplifies the control procedures and drastically reduces errors.

In particular, according to the present invention, the creation of the virtual card and the association/assignment of the telephone subscription number as card identifier are performed by a software (APP) that is downloaded and executed onto the smartphone, i.e. the same device that is then intended to be used for the payment. This specific sequence allows to have at the EMI a simple memorization (i.e. the registration is a simple memorization) of the virtual credit card identifiers that are initialized in each smartphone (i.e. in a local environment) by the software (APP). It means that the initialization(creation) step of the virtual card identifier is not performed centrally by a software executed in the affiliate bank as in US 2009/0254440, but is performed locally by and in each smartphone and this allows to simplify the management software installed in the affiliated bank (and the corresponding processing time for performing each operation) and, in particular, there is no need for the affiliated bank to have a software to bind an account to the mobile phone. Moreover, according to the present invention, the software (APP) downloaded and executed in the smartphone does not create any number, but it just initializes the ID of the virtual card with a value (i.e. the telephone subscription number) that is read by the APP itself when it is downloaded onto the smartphone. It means that it uses only a value that already exists (and is not created) and that is already unique in a different field (i.e. phone communications), while US 2009/0254440 requires a software to create such additional 10-digit number and such software is stored and executed in the server of the affiliate bank. Therefore, the solution according to the invention allows to avoid having in the affiliate bank a software for creating an additional 10-digit number and for suitably add the latter to the telephone number.

Furthermore, in US 2009/0254440 the enrolling user interacts with a kiosk to enter their name and phone number, so in the transaction serve it is required a software for checking/verifying the information entered by the user. On the contrary, according to the present invention, the software (APP) that is executed onto the smartphone performs automatically the association/assignment of the telephone subscription number as card identifier, thus avoiding the need to have in the transaction server said checking/verifying software.

## Claims

1. A method for constituting a pre-paid virtual card, **characterised by** downloading from the internet onto a smartphone an application (APP) which at the moment in which it is downloaded creates a pre-paid virtual card and automatically assigns as its identifier the telephone subscription number of said smartphone, then registering with an Electronic Money Institution (EMI) which is to operate said pre-paid virtual card, at least said telephone subscription number, the E-mail address of the holder of said subscription, a password for subsequent access, and a PIN security code for future payment instructions,
wherein after said application (APP) has created the pre-paid virtual card and has assigned the telephone subscription number as its identifier, it connects to said Electronic Money Institution (EMI) to register therewith the data relative to the holder of the electronic card, said password and said PIN code.

2. A method as claimed in claim 1, wherein the data is registered with said Electronic Money Institution (EMI) at the moment of the initial use of said pre-paid virtual card.

3. A method as claimed in one or more of the preceding claims, wherein on opening said application (APP) an internet connection is established with said Electronic Money Institution (EMI), communications between the user and the Electronic Money Institution taking place via the application (APP).

4. A method as claimed in one or more of the preceding claims, further comprising establishing direct communications between the user and the Electronic Money Institution (EMI).

5. A method as claimed in one or more of the preceding claims, wherein after the pre-paid virtual card has been created and the user data have been registered by the computer system of the EMI, said application (APP) is opened for transferring funds to another pre-paid virtual card pertaining to the same network.

6. A method as claimed in one or more of the preceding claims, wherein after the pre-paid virtual card has been created and the user data have been registered by the computer system of the EMI, said application (APP) is opened and, if the user wishes to transfer funds to another pre-paid virtual card pertaining to the same network, he/she chooses the option "SEND", which proposes a panel in which the user has to enter the telephone subscription number of the beneficiary and the amount to be transferred.

7. A method as claimed in one or more of the preceding claims, wherein each time said pre-paid virtual card is used, several options are proposed on the smartphone screen, consisting of funds transfer, request for payment, and control of the account of said pre-paid virtual card.

8. A method as claimed in one or more of the preceding claims, wherein if the user wishes to transfer funds to another pre-paid virtual card pertaining to the same network, the following operations are performed:
- though said application (APP) the settlor enters the identifier of the beneficiary, i.e. the telephone subscription number thereof and the amount to be transferred,
- said application (APP) forwards then the request of transfer funds to the Electronic Money Institution (EMI), which first verifies in its computer system the existence of the beneficiary identifier, and the presence in the pre-paid virtual card of sufficient funds to carry out the transaction,
- if this check is positive, the Electronic Money Institution (EMI) transmits to the settlor, through said application (APP), the main data of the beneficiary, if known, to enable the settlor to check the correctness of the data entered and the instructions given, and asks the settlor to confirm the transaction by entering the PIN code, or to cancel the operation if an error is found,
- when the settlor has confirmed the operation, the computer system of the Electronic Money Institution (EMI) verifies the correctness of the settlor's PIN code, the correspondence of the number of the cell phone which gave the order with the one onto which said application (APP) was downloaded at the moment of creating the pre-paid virtual card, and also the correspondence of the International Mobile Equipment Identity (IMEI) code, which uniquely identifies the cell phone which gave the order,
- if the check is positive, the Electronic Money Institution (EMI) performs the operation and informs the settlor and the beneficiary of its successful execution, while updating in real time the availability of the respective pre-paid virtual cards.

9. A method as claimed in one or more of the preceding claims, wherein if the user wishes to transfer funds to an actual current account, the following operations are performed:
- though said application (APP) the settlor enters the data required to perform the operation, and in particular the IBAN number of the beneficiary, the name of beneficiary, the amount and the reason,
- said application (APP) forwards the request to the Electronic Money Institution (EMI), which carries out a preliminary check on the correctness of the IBAN code of the beneficiary and of sufficient availability in the settlor pre-paid virtual card to carry out the transaction,
- after performing these checks, the Electronic Money Institution (EMI) sends the data to the bank of the beneficiary to obtain a verification of the correctness of the IBAN code inserted by the settlor and the amount to be paid, and then on the basis of these data retransmitted to the settlor for his/her verification, the Electronic Money Institution (EMI) requests confirmation of the operation,
- the settlor then gives said confirmation by entering the PIN code,
- on obtaining this confirmation, the Electronic Money Institution (EMI) updates the availability on the prepaid virtual card of the settlor, taking into account the amount transferred and any commission, and also performs the usual operations connected with the transfer of funds to an actual current account.

10. A method as claimed in one or more of the preceding claims, wherein if the user wishes to request for a payment to another person pertaining to the Electronic Money Institution (EMI) network, and hence a holder of another pre-paid virtual card, the following operations are performed:
- through said application (APP), the user enters the cell phone number which identifies the user to which the requested payment is aimed, the amount requested and the possible reason,
- the request is checked by the Electronic Money Institution (EMI), which first verifies in its computer system the existence of the recipient identifier, and the presence in the pre-paid virtual card of sufficient funds to carry out the transaction,
- then the request is forwarded to the cell phone of the recipient who is able to give the payment authorization by inserting his/her own PIN code.

11. A method as claimed in one or more of the preceding claims, wherein said application (APP) allows the holder of the pre-paid virtual card to display his/her account on his/her cell phone, including the latest transactions, also in order to verify the correctness of the operations carried out.

12. A method as claimed in one or more of the preceding claims, wherein if the transactions take place between pre-paid virtual card holders who have chosen to work with a different currency, the computer system of the Electronic Money Institution (EMI) instantly converts the amounts at the latest availability currency rate, crediting the beneficiary with the already converted amount and applying the commissions for the currency transaction.

## Patentansprüche

1. Verfahren zur Erstellung einer virtuellen Prepaid-Kreditkarte, **gekennzeichnet durch** das Herunterladen aus dem Internet auf ein Smartphone einer Applikation (APP), die beim ihren Herunterladen eine virtuelle Prepaid-Kreditkarte erstellt und automatisch die Telefon-Abonnementnummer des Smartphones als Kennung des Karteninhabers zuweist, dann das Registrieren bei einer Electronic-Money-Institution (EMI), die die virtuelle Prepaid-Kreditkarte aktivieren soll, mindestens der Telefon-Abonnementnummer, der Email-Adresse des Inhabers des Abonnements, eines Passwort für den späteren Zugang und eines PIN-Sicherheitscodes für zukünftige Zahlungsanweisungen,
wobei nachdem die Applikation (APP), die virtuelle Prepaid-Kreditkarte erstellt hat und die Telefon-Abonnementnummer als Kennung des Karteninhabers zugewiesen hat, eine Verbindung mit der Electronic-Money-Institution (EMI) erstellt, um dort die Daten bezüglich des Inhabers der elektronischen Karte, das Passwort und den PIN-Code zu registrieren.

2. Verfahren nach Anspruch 1, wobei die Daten bei der ersten Verwendung der virtuellen Prepaid-Kreditkarte bei der Electronic-Money-Institution (EMI) registriert werden.

3. Verfahren nach einem oder mehreren der vorhergehenden Ansprüche, wobei eine Internetverbindung mit der Electronic-Money-Institution (EMI) beim Öffnen der Applikation (APP) bestimmt wird und die Kommunikation zwischen dem Benutzer und der Electronic-Money-Institution über die Applikation (APP) erfolgt.

4. Verfahren nach einem oder mehreren der vorhergehenden Ansprüche, ferner umfassend das Bestimmen einer direkten Kommunikation zwischen dem Benutzer und der Electronic-Money-Institution (EMI).

5. Verfahren nach einem oder mehreren der vorhergehenden Ansprüche, wobei nachdem die virtuelle Prepaid-Kreditkarte erstellt wurde und die Benutzerdaten durch das Computersystem des EMI registriert wurden, wird die Applikation (APP) geöffnet, um Geldmittel auf eine andere virtuelle Prepaid-Kreditkarte, die zu demselben Netz gehört, zu transferieren.

6. Verfahren nach einem oder mehreren der vorhergehenden Ansprüche, wobei, nachdem die virtuelle Prepaid-Kreditkarte erstellt wurde und die Benutzerdaten durch das Computersystem des EMI registriert wurden, die Applikation (APP) geöffnet wird und der Benutzer, wenn er Geld auf eine andere virtuelle Prepaid-Kreditkarte desselben Netzes transferieren möchte, die Option "SENDEN" wählt, die ein Feld vorschlägt, in das der Benutzer die Telefon-Abonnementnummer des Empfängers und den zu transferierenden Betrag eingeben muss.

7. Verfahren nach einem oder mehreren der vorhergehenden Ansprüche, wobei, jedes Mal wenn die virtuelle Prepaid-Kreditkarte verwendet wird, mehrere Optionen auf dem Smartphone-Display vorgeschlagen werden, die Geldtransfer, Zahlungsanforderung und Kontrolle des Kontos der virtuellen Prepaid-Kreditkarte umfassen.

8. Verfahren nach einem oder mehreren der vorhergehenden Ansprüche, wobei die folgenden Vorgänge durchgeführt werden, wenn der Benutzer Geld auf eine andere virtuelle Prepaid-Kreditkarte desselben Netzes transferieren möchte:
- mittels dieser Applikation (APP) gibt der Geldsender die Kennungsdaten des Empfängers, d.h. seine Telefon-Abonnementnummer und den zu transferierenden Betrag, ein,
- die Applikation (APP) leitet dann den Antrag auf Geldtransfer an die Electronic-Money-Institution (EMI) weiter, die zunächst in seinem Computersystem das Vorhandensein der Kennungsdaten des Empfängers und das Vorhandensein ausreichender Geldmittel auf der virtuellen Prepaid-Kreditkarte zum Durchführen der Transaktion prüft,
- wenn diese Prüfung positiv ist, sendet die Electronic-Money-Institution (EMI) dem Geldsender mittels dieser Applikation (APP) die wichtigsten Daten des Empfängers, sofern diese bekannt sind, sodass der Geldsender die Richtigkeit der eingegebenen Daten und der erteilten Anweisungen prüfen kann, und fragt ihn danach, die Transaktion durch Eingabe des PIN-Codes zu bestätigen oder den Vorgang abzubrechen, wenn ein Fehler festgestellt wird,
- wenn der Geldsender den Vorgang bestätigt hat, prüft das Computersystem der Electronic-Money-Institution (EMI) die Richtigkeit des PIN-Codes des Geldsenders, die Übereinstimmung der Nummer des Mobiltelefons, das den Auftrag erteilt hat, mit der Nummer des Mobiltelefons, auf das die Applikation (APP) bei der Erstellung der virtuellen Prepaid-Kreditkarte heruntergeladen wurde, sowie die Übereinstimmung des Internationale Mobile Geräteidentität (IMEI)-Codes, der das Mobiltelefon, das den Auftrag erteilt hat, eindeutig identifiziert,
- wenn die Prüfung positiv ist, führt die Electronic-Money-Institution (EWI) die Transaktion durch und informiert den Geldsender und den Empfänger über die erfolgreiche Ausführung, indem es gleichzeitig die Verfügbarkeit der jeweiligen virtuellen Prepaid-Kreditkarten in Echtzeit aktualisiert.

9. Verfahren nach einem oder mehreren der vorhergehenden Ansprüche, wobei die folgenden Vorgänge durchgeführt werden, wenn der Benutzer Geld auf ein tatsächlichen Konto transferieren möchte:
- mittels dieser Applikation (APP) gibt der Geldsender die zum Durchführen des Vorgangs erforderlichen Daten ein, insbesondere die IBAN-Nummer des Empfängers, den Namen des Empfängers, den Betrag und den Zahlungsgrund,
- die Applikation (APP) leitet den Antrag an die Electronic-Money-Institution (EWI) weiter, die eine Vorabprüfung der Richtigkeit des IBAN-Codes des Empfängers und der ausreichenden Verfügbarkeit auf der virtuellen Prepaid-Karte des Geldsenders zum Durchführen der Transaktion durchführt,
- nach dem Durchführen dieser Prüfungen sendet die Electronic-Money-Institution (EMI) die Daten an die Bank des Empfängers, um die Richtigkeit des vom Geldsender eingegebenen IBAN-Codes und des zu zahlenden Betrags zu prüfen, und die Electronic-Money-Institution (EMI) fragt dann basierend auf dieser Daten, die dem Geldsender wieder zur Prüfung gesendet werden, nach einer Bestätigung des Vorgangs,
- der Geldsender bestätigt durch Eingabe des PIN-Codes,
- bei Empfang dieser Bestätigung aktualisiert die Electronic-Money-Institution (EMI) die Verfügbarkeit auf der virtuellen Prepaid-Kreditkarte des Geldsenders unter Berücksichtigung des transferierten Betrags und einer eventuellen Provision und führt außerdem die üblichen Vorgänge im Zusammenhang mit der Überweisung von Geld auf ein tatsächliches Konto durch.

10. Verfahren nach einem oder mehreren der vorhergehenden Ansprüche, wobei die folgenden Vorgänge durchgeführt werden, wenn der Benutzer eine Zahlung an eine andere Person, die zum Netz der Electronic-Money-Institution (EMI) gehört, und somit an einen Inhaber einer anderen virtuellen Prepaid-Kreditkarte, anfordern möchte:
- mittels der Applikation (APP) gibt der Benutzer die Mobiltelefonnummer, die den Benutzer identifiziert, an den die angeforderte Zahlung gerichtet ist, den angeforderten Betrag und den möglichen Zahlungsgrund ein,
- der Antrag wird von der Electronic-Money-Institution (EMI) geprüft, die zunächst in seinem Computersystem das Vorhandensein der Kennungsdaten des Empfängers und das Vorhandensein ausreichender Geldmittel auf der virtuellen Prepaid-Kreditkarte zum Durchführen der Transaktion prüft,
- dann wird die Antrag an das Mobiltelefon des Empfängers weitergeleitet, der die Zahlung durch Eingabe seines eigenen PIN-Codes berechtigen kann.

11. Verfahren nach einem oder mehreren der vorhergehenden Ansprüche, wobei die Applikation (APP) dem Inhaber der virtuellen Prepaid-Kreditkarte ermöglicht, sein Konto auf seinem Mobiltelefon, einschließlich der letzten Transaktionen, anzuzeigen, auch um die Richtigkeit der durchgeführten Vorgänge zu prüfen.

12. Verfahren nach einem oder mehreren der vorhergehenden Ansprüche, wobei das Computersystem der Electronic-Money-Institution (EMI) die Beträge sofort zum letzten verfügbaren Währungskurs umrechnet, dem Empfänger den bereits umgerechneten Betrag überweist und die Provisionen für die Währungstransaktion berechnet, wenn die Transaktionen zwischen Inhabern virtueller Prepaid-Kreditkarten stattfinden, die sich entschieden haben, mit einer anderen Währung zu arbeiten.

## Revendications

1. Procédé de constitution d'une carte virtuelle prépayée, **caractérisé par** le téléchargement depuis Internet sur un smartphone d'une application (APP) qui, au moment de son téléchargement, crée une carte virtuelle prépayée et lui attribue automatiquement comme identifiant le numéro d'abonnement téléphonique dudit smartphone, puis par l'enregistrement auprès d'un établissement de monnaie électronique (EME) devant gérer ladite carte virtuelle prépayée, au moins dudit numéro d'abonnement téléphonique, de l'adresse électronique du titulaire dudit abonnement, d'un mot de passe pour l'accès ultérieur et d'un code de sécurité PIN pour les instructions de paiement ultérieures,
dans lequel, après que ladite application (APP) a créé la carte virtuelle prépayée et lui a attribué le numéro d'abonnement téléphonique comme identifiant, elle se connecte audit établissement de monnaie électronique (EME) pour y enregistrer les données relatives au titulaire de la carte électronique, ledit mot de passe et ledit code PIN.

2. Procédé selon la revendication 1, dans lequel les données sont enregistrées auprès dudit établissement de monnaie électronique (EME) au moment de l'utilisation initiale de ladite carte virtuelle prépayée.

3. Procédé selon l'une ou plusieurs des revendications précédentes, dans lequel, à l'ouverture de ladite application (APP), une connexion Internet est établie avec ledit établissement de monnaie électronique (EME), les communications entre l'utilisateur et l'établissement de monnaie électronique s'effectuant par l'intermédiaire de l'application (APP).

4. Procédé selon l'une ou plusieurs des revendications précédentes, comprenant en outre l'établissement de communications directes entre l'utilisateur et l'établissement de monnaie électronique (EME).

5. Procédé selon l'une ou plusieurs des revendications précédentes, dans lequel, après la création de la carte virtuelle prépayée et l'enregistrement des données de l'utilisateur par le système informatique de l'EME, ladite application (APP) est ouverte pour transférer des fonds vers une autre carte virtuelle prépayée appartenant au même réseau.

6. Procédé selon l'une ou plusieurs des revendications précédentes, dans lequel, après la création de la carte virtuelle prépayée et l'enregistrement des données de l'utilisateur par le système informatique de l'EME, ladite application (APP) est ouverte et, si l'utilisateur souhaite transférer des fonds vers une autre carte virtuelle prépayée appartenant au même réseau, il/elle choisit l'option « ENVOYER », qui propose un panneau dans lequel l'utilisateur doit saisir le numéro d'abonnement téléphonique du bénéficiaire et le montant à transférer.

7. Procédé selon l'une ou plusieurs des revendications précédentes, dans lequel, à chaque utilisation de ladite carte virtuelle prépayée, plusieurs options sont proposées sur l'écran du smartphone, à savoir le transfert de fonds, la demande de paiement et le contrôle du compte de ladite carte virtuelle prépayée.

8. Procédé selon l'une ou plusieurs des revendications précédentes, dans lequel, si l'utilisateur souhaite transférer des fonds vers une autre carte virtuelle prépayée appartenant au même réseau, les opérations suivantes sont effectuées :
- dans ladite application (APP), le donneur introduit l'identifiant du bénéficiaire, c'est-à-dire son numéro d'abonnement téléphonique, et le montant à transférer,
- ladite application (APP) transmet ensuite la demande de transfert de fonds à l'établissement de monnaie électronique (EME), qui vérifie d'abord dans son système informatique l'existence de l'identifiant du bénéficiaire et la présence dans la carte virtuelle prépayée de fonds suffisants pour effectuer la transaction,
- si cette vérification est positive, l'établissement de monnaie électronique (EME) transmet au donneur, par l'intermédiaire de ladite application (APP), les données principales du bénéficiaire, si elles sont connues, afin de permettre au donneur de vérifier l'exactitude des données saisies et des instructions données, et demande au donneur de confirmer la transaction en saisissant le code PIN, ou d'annuler l'opération si une erreur est constatée,
- lorsque le donneur a confirmé l'opération, le système informatique de l'établissement de monnaie électronique (EME) vérifie l'exactitude du code PIN du donneur, la correspondance du numéro du téléphone portable qui a donné l'ordre avec celui sur lequel ladite application (APP) a été téléchargée au moment de la création de la carte virtuelle prépayée, ainsi que la correspondance du code IMEI (International Mobile Equipment Identity), qui identifie de manière unique le téléphone portable qui a donné l'ordre,
- si le contrôle est positif, l'établissement de monnaie électronique (EME) effectue l'opération et informe le donneur et le bénéficiaire de sa bonne exécution, tout en mettant à jour en temps réel la disponibilité des cartes virtuelles prépayées respectives.

9. Procédé selon l'une ou plusieurs des revendications précédentes, dans lequel, si l'utilisateur souhaite transférer des fonds vers un compte courant réel, les opérations suivantes sont effectuées :
- dans ladite application (APP), le donneur introduit les données nécessaires à la réalisation de l'opération, notamment le numéro IBAN du bénéficiaire, le nom du bénéficiaire, le montant et le motif,
- ladite application (APP) transmet la demande à l'établissement de monnaie électronique (EME), qui effectue un contrôle préliminaire de l'exactitude du code IBAN du bénéficiaire et de la disponibilité suffisante de la carte virtuelle prépayée du donneur pour effectuer la transaction,
- après avoir effectué ces vérifications, l'établissement de monnaie électronique (EME) envoie les données à la banque du bénéficiaire pour obtenir une vérification de l'exactitude du code IBAN inséré par le donneur et du montant à payer, puis, sur la base de ces données retransmises au donneur pour vérification, l'établissement de monnaie électronique (EME) demande la confirmation de l'opération,
- le donneur donne ensuite sa confirmation en introduisant le code PIN,
- dès l'obtention de cette confirmation, l'établissement de monnaie électronique (EME) met à jour la disponibilité de la carte virtuelle prépayée du donneur, en tenant compte du montant transféré et des commissions éventuelles, et effectue également les opérations habituelles liées au transfert de fonds vers un compte courant réel.

10. Procédé selon l'une ou plusieurs des revendications précédentes, dans lequel, si l'utilisateur souhaite demander un paiement à une autre personne appartenant au réseau de l'établissement de monnaie électronique (EME), et donc titulaire d'une autre carte virtuelle prépayée, les opérations suivantes sont effectuées :
- par l'intermédiaire de ladite application (APP), l'utilisateur saisit le numéro de téléphone portable qui identifie l'utilisateur auquel le paiement demandé est destiné, le montant demandé et la raison éventuelle,
- la demande est vérifiée par l'établissement de monnaie électronique (EME), qui vérifie d'abord dans son système informatique l'existence de l'identifiant du destinataire et la présence dans la carte virtuelle prépayée de fonds suffisants pour effectuer la transaction,
- puis la demande est transmise au téléphone portable du destinataire qui peut donner l'autorisation de paiement en insérant son propre code PIN.

11. Procédé selon l'une ou plusieurs des revendications précédentes, dans lequel ladite application (APP) permet au titulaire de la carte virtuelle prépayée d'afficher son compte sur son téléphone portable, y compris les dernières transactions, afin de vérifier l'exactitude des opérations effectuées.

12. Procédé selon l'une ou plusieurs des revendications précédentes, dans lequel, si les transactions ont lieu entre des titulaires de cartes virtuelles prépayées qui ont choisi de travailler avec une devise différente, le système informatique de l'établissement de monnaie électronique (EME) convertit instantanément les montants au dernier taux de change disponible, en créditant le bénéficiaire du montant déjà converti et en appliquant les commissions pour la transaction monétaire.
